# EUROPÄISCHE PATENTSCHRIFT

(11) **EP 1 979 204 B1**
(45) Veröffentlichungstag und Bekanntmachung des Hinweises auf die Patenterteilung: **19.05.2010**
(21) Anmeldenummer: 07723653.7
(22) Anmeldetag: 22.03.2007
(51) Int. Cl.: B60R 21/20, B60R 21/16

(54) **AIRBAGMODUL MIT UNTER VAKUUM IN FOLIE VERPACKTEM GASSACK**
AIRBAG MODULE WITH AN AIRBAG PACKED IN FOIL UNDER VACUUM
MODULE AIRBAG PRÉSENTANT UNE POCHE À GAZ EMBALLÉE DANS UNE FEUILLE SOUS VIDE

(30) Priorität: 28.03.2006 DE 202006005319 U
(43) Veröffentlichungstag der Anmeldung: 15.10.2008
(73) Patentinhaber: Takata-Petri AG, 63743 Aschaffenburg (DE)
(72) Erfinder: ECKERT, Nick, 12587 Berlin (DE); LAZAR, Rolf, 12683 Berlin (DE); FAGIR, Rafael, 10559 Berlin (DE); COHRS, Mathias, 10777 Berlin (DE)
(74) Vertreter: Baumgärtel, Gunnar
(86) Internationale Anmeldenummer: PCT/EP2007/002707
(87) Internationale Veröffentlichungsnummer: WO 2007/112887

(56) Entgegenhaltungen:
- EP-A1- 0 655 369
- WO-A-02/14117
- DE-A1- 10 114 208
- US-A- 5 096 222

## Beschreibung

Die Erfindung betrifft ein Airbagmodul mit unter Vakuum in Folie verpacktem Gassack nach dem Oberbegriff des Anspruchs 1.

Es ist bekannt, Gassäcke für Airbagmodule in gefaltetem Zustand unter Vakuum in Folie zu verpacken. Diese Faltpakete werden anschließend in die Airbagmodule eingesetzt. Der Nachteil dieser Faltpakete besteht darin, dass sie im Crashfall undefiniert bezüglich der Kraft und des geometrischen Verlaufs aufreißen.

Der Erfindung liegt deshalb die Aufgabe zugrunde, ein definiertes Aufreißen der Folie zu erreichen.

Erfindungsgemäß wird das gemäß den Merkmalen des Anspruchs 1 erreicht.

Sollreißstellen sind bei Airbagmodulen bisher in den Abdeckkappen bekannt. Diese werden einerseits bei der Herstellung der Abdeckkappen als Materialschwächungen eingebracht. Andererseits ist aus der DE 199 07 742 A1 bekannt, durch Einbringen eines Heizdrahtes in die Abdeckkappe an den vorgesehenen Aufreißstellen der Abdeckkappe Materialschwächungen erst im Crashfall zu erzeugen. Das hat den Vorteil, dass die Abdeckkappe im Grundzustand eine optisch günstige, durchgehende Wand ohne Spalten oder sichtbare Randvorkerbungen aufweist.

Ein Airbagmodul nach dem Oberbegriff des Anspruchs 1 ist aus der DE 101 14 208 bekannt.

Gemäß Erfindung, ist die Sollreißstelle im Bereich der Aufreißkanten der Abdeckkappe vorgesehen, so dass bei deren Aufreißen die Risskanten der Folie etwa im Bereich der Aufreißkanten der Abdeckkappe liegen.

Die Sollreißstelle der Folie kann unterschiedlich ausgebildet sein. Die erste prinzipielle Möglichkeit besteht darin, dass die Folie bereits vor der Verpackung des Gassacks eine Sollreißstelle aufweist. Als Sollreißstelle kann in diesem Fall eine Aufreißnaht oder einer eingeprägten Kontur vorgesehen sein. Es ist vorteilhaft, dass die Sollreißstelle bei Verwendung einer Mehrschichtfolie in einer Schicht vorgesehen ist, wobei es zweckmäßig ist, dass die Sollreißstelle in der äußeren, der Abdeckkappe zugekehrten Schicht vorhanden ist.

In einer weiteren Ausführungsform ist vorgesehen, dass die Folie in Abschnitten, die neben den Aufreißkanten der Abdeckkappe liegen, zumindest teilweise mit der Abdeckkappe verbunden ist, wobei eine vollflächige, linienförmige bzw. punktförmige Verbindung vorgesehen sein kann. Durch diese Verbindung wird eine Relativbewegung der Abdeckkappe und der Folie zueinander verhindert. Dadurch konzentriert sich die Spannung beim Öffnen auf die relativ schmalen Bereiche der Folie unterhalb der Aufreißkanten der Abdeckkappe, was dort zu einem schnellen und definierten Aufreißen der Folie führt.

Die zweite prinzipielle Ausbildung der Sollreißstelle ist dadurch gekennzeichnet, dass die Folie erst bei bzw. unmittelbar vor der Zündung des Gasgenerators eine Sollreißstelle aufweist.

In einer ersten Ausführungsform weist die Folie eine mechanisch erzeugte Sollreißstelle auf. Hierfür können z.B. scharfe Kanten an der Innenseite der Abdeckkappe vorgesehen sein. Bei der Entfaltung des Gassacks wird die Folie gegen diese Kanten gedrückt, wodurch die Folie an diesen Stellen perforiert wird, d.h. örtlich geschwächt wird.

In einer zweiten Ausführungsform weist die Folie eine thermisch erzeugte Sollreißstelle auf. Für die Erzeugung dieser Sollreißstelle kann mindestens ein Heizdraht vorgesehen sein, der vorzugsweise zwischen der Abdeckkappe und der Folie angeordnet ist.

In einer dritten Ausführungsform ist die Folie in Abschnitten, die neben den Aufreißkanten der Abdeckkappe liegen, zumindest teilweise mit der Abdeckkappe verbindbar. Hierzu kann die Abdeckkappe an ihrer Innenseite Haftmittel aufweisen, an die die Folie bei Entfaltung des Gassacks andrückbar ist. Als Haftmittel können vorzugsweise doppelseitiges Klebeband oder Strukturelemente mit einem hohen Reibwert vorgesehen sein. Eine entsprechende Struktur kann aber auch an die Elemente der Abdeckkappe angeformt sein.

Die Erfindung soll in Ausführungsbeispielen anhand von Zeichnungen erläutert werden. Es zeigen:
- Fig. 1 -: einen Abschnitt einer Folie mit einer Aufreißnaht als Sollreißstelle;
- Fig.2 -: einen Abschnitt einer Folie mit einer eingeprägten Kontur als Sollreißstelle;
- Fig. 3a-c -: Aufreißgeometrien der Folie und der zugehörigen Abdeckkappe;
- Fig. 4 -: eine Ausführungsform mit einer Folie, die mit der Abdeckkappe verbunden ist;
- Fig. 5 -: eine Ausführungsform mit scharfen Kanten an der Innenseite der Abdeckkappe;
- Fig. 6 -: eine Ausführungsform mit einem Heizdraht;
- Fig. 7 -: Ausführungsformen mit Haftmitteln.

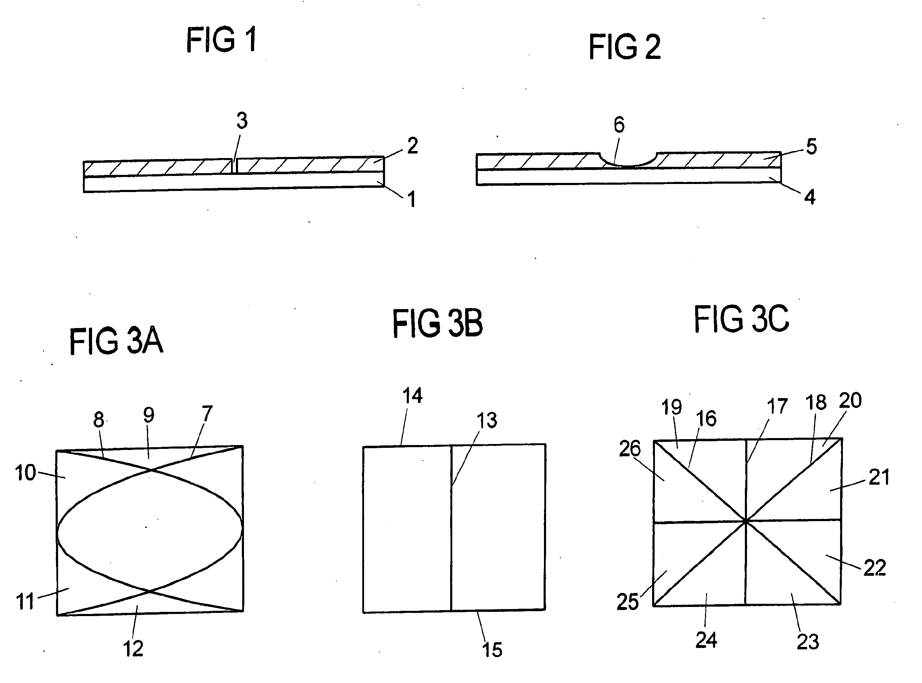

In der Fig. 1 ist ein Abschnitt einer Folie dargestellt, die aus zwei Schichten 1 und 2 besteht. Die erste Schicht 1, die bei der Verpackung eines nicht dargestellten Gassacks an diesem anliegt, ist durchgehend ausgeführt. Die zweite Schicht 2, die der nicht dargestellten Abdeckkappe des Airbagmoduls zugekehrt ist, weist eine Aufreißnaht 3 in Form eines Schlitzes auf, d.h., dass die Schicht 2 an dieser Stelle durchtrennt ist. Dadurch ist die Folie an dieser Stelle geschwächt und reißt bei der Entfaltung des Gassacks an dieser Stelle bevorzugt auf. Die Durchtrennung der Schicht 2 kann hierbei auch unterbrochen, das heißt linienförmig perforiert, ausgeführt sein.

Die Fig. 2 zeigt ebenfalls eine zweischichtige Folie, wobei eine erste Schicht 4, die am Gassack anliegt, ebenfalls durchgehend ausgeführt ist. Eine zweite Schicht 5 weist als Sollbruchstelle eine eingeprägte Kontur 6 auf, welche entlang ihres Verlaufes ebenfalls unterbrochen ausgeführt sein kann. Diese Kontur als Materiaischwächung kann mechanisch oder thermisch erzeugt werden.

In den Figuren 3a bis 3c ist beispielhaft dargestellt, wie die Sollbruchstellen in der Folie verlaufen können. Es ist der Abschnitt der Folie dargestellt, der unterhalb der Abdeckkappe liegt. Die Sollbruchstellen der Abdeckkappe weisen den gleichen Verlauf auf. Bei der Ausführung der Fig. 3a sind die Sollbruchstellen in den Begrenzungslinien zweier in etwa parabelförmiger Abschnitte 7, 8 vorgesehen. Bei der Entfaltung des Gassacks wird einer der dieser Abschnitte zuerst aufreißen. Reißt z.B. der Abschnitt 7 zuerst auf, verbleiben Randabschnitte 9, 10, 11, 12, die dann entlang des noch verbliebenen Teils des parabelförmigen Abschnitts 8 aufreißen. Bei der Ausführung der Fig. 3b verlaufen Sollbruchstellen entlang einer Mittellinie 13 und zweier Begrenzungslinien 14, 15. In diesem Fall werden also nur zwei Teile aufgeklappt. Bei der Ausführung der Fig. 3c sind Sollbruchstellen entlang sternförmig verlaufender Linien 16, 17, 18 vorgesehen, so dass acht Abschnitte 19 bis 26 entlang der Randlinien aufklappen.

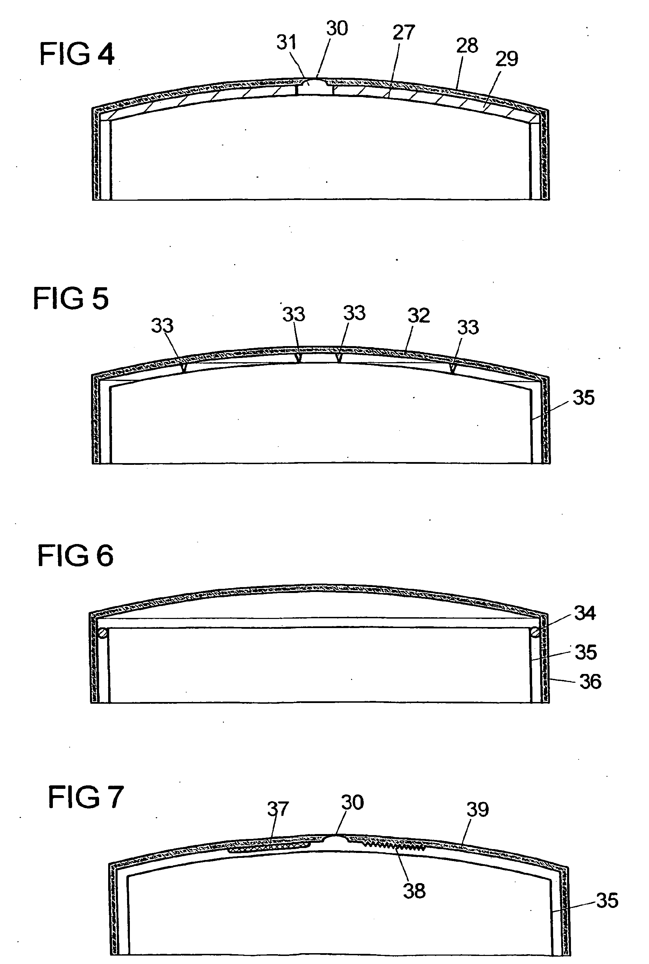

Bei der Ausführungsform der Fig. 4 wird der obere Abschnitt 27 einer Folie, die den gefalteten Gassack umgibt, bereits bei der Montage des Airbagmoduls mit der Innenseite der zugeordneten Abdeckkappe 28 verbunden. Das kann z.B. mittels einer Kleberschicht 29 erfolgen. Dabei wird die Folie im Bereich einer Aufreißkante 30 der Abdeckkappe nicht verklebt. Infolge der Verklebung konzentriert sich wegen der fehlenden Relativbewegung zwischen der Folie und der Abdeckkappe die Spannung beim Öffnen des Gassacks auf den relativ schmalen Bereich der Folie unterhalb der Aufreißkante 30. Dieser Vorgang kann noch zusätzlich unterstützt werden, indem die Folie unterhalb der Aufreißkante 30 eine Aufreißnaht 31 aufweist.

Bei der Ausführungsform der Fig. 5 weist eine Abdeckkappe 32 an ihrer Innenseite scharfe Kanten 33 auf. Bei dieser Ausführungsform weist die Folie vor der Entfaltung des Gassacks keine Sollreißstelle auf. Diese wird mittels der scharfen Kanten 33 erst bei der Entfaltung des Gassacks erzeugt, indem die Folie dabei gegen diese scharfen Kanten gedrückt und dabei perforiert wird, so dass die Folie anschließend an diesen Stellen aufreißt.

Auch bei der Ausführungsform der Fig. 6 weist die Folie vor der Entfaltung des Gassacks keine Sollreißlinie auf. Zur Erzeugung einer Sollreißlinie ist bei dieser Ausführung ein Heizdraht 34 vorgesehen, der zwischen der Folie 35 und der Abdeckkappe 36 angeordnet ist. Dieser Heizdraht erhitzt bei Beginn der Entfaltung des Gassacks die Folie 35, so dass sie an dieser Stelle geschwächt wird, und deshalb dort vorzugsweise aufreißt.

Die Ausführungsformen der Fig. 7 sind vergleichbar mit der Ausführungsform der Fig. 4. Dort wurde die Folie bereits bei der Montage in bestimmten Abschnitten mit der Abdeckkappe verbunden. Bei der Ausführungsform der Fig. 7 erfolgt diese Verbindung erst bei der Entfaltung des Gassacks. Zu diesem Zweck sind an der Innenseite der Abdeckkappe 39 im vorliegenden Fall ein doppelseitiges Klebeband 37 oder Strukturelemente 38, die einen hohen Reibwert aufweisen, vorgesehen. Bei derartigen Strukturelementen 38 kann es sich um Bereiche der Innenseite der Abdeckkappe 39 mit einer angeformten Riffel- oder Hakenstruktur handeln. Weiterhin können an der Innenseite angebrachte Segmente mit aufgerauter Oberfläche (beispielsweise eine Hakenseite eines Klettverschlusses oder Elemente mit sandpapierähnlicher Struktur) vorgesehen sein. Bei Entfaltung des Gassacks wird die Folie 35 gegen das Klebeband 37 bzw. gegen die Strukturelemente 38 gedrückt und dadurch gehalten, während sie im Bereich der Aufreißkante 30 der Airbagkappe frei beweglich ist und deshalb dort bevorzugt aufreißt.

## Patentansprüche

1. Airbagmodul mit unter Vakuum in Folie verpacktem Gassack, mit Gasgenerator und mit Abdeckkappe, wobei die Folie (1, 2, 4, 5, 35) im Crashfall mindestens eine Sollreißstelle (3, 6, 7, 8, 13 - 18) aufweist,
**dadurch gekennzeichnet,**
**dass** die Sollreißstelle (3, 6, 7, 8, 13 - 18) im Bereich der Aufreißkanten (30) der Abdeckkappe (28) vorgesehen ist, und dass die Folie in Abschnitten (27), die neben den Aufreißkanten (30) der Abdeckkappe (28, 39) liegen, zumindest teilweise mit der Abdeckkappe (28, 39) verbunden ist oder dass diese Verbindung erst b ei der Entfaltung des Gassacks erfolgt.

2. Airbagmodul nach Anspruch 1, **dadurch gekennzeichnet, dass** die Folie (1, 2, 4, 5) bereits vor der Verpackung des Gassacks eine Sollreißstelle (3, 6) aufweist.

3. Airbagmodul nach Anspruch 2, **dadurch gekennzeichnet, dass** als Sollreißstelle eine Aufreißnaht (3) oder eine eingeprägte Kontur (6) vorgesehen ist.

4. Airbagmodul nach Anspruch 2 oder 3, **dadurch gekennzeichnet, dass** die Sollreißstelle (3, 6) bei Verwendung einer Mehrschichtfolie in einer Schicht (2, 5) vorgesehen ist.

5. Airbagmodul nach Anspruch 4, **dadurch gekennzeichnet, dass** die Sollreißstelle (3, 6) in der äußeren, der Abdeckkappe zugekehrten Schicht (2, 5) vorgesehen ist.

6. Airbagmodul nach mindestens einem der vorhergehenden Ansprüche, **dadurch gekennzeichnet, dass** eine vollflächige, linienförmige bzw. punktförmige Verbindung vorgesehen ist.

7. Airbagmodul nach Anspruch 1 , **dadurch gekennzeichnet, dass** die Folie (35) erst bei bzw. unmittelbar vor der Zündung des Gasgenerators eine Sollreißstelle aufweist.

8. Airbagmodul nach Anspruch 7, **dadurch gekennzeichnet, dass** die Folie (35) eine mechanisch erzeugte Sollreißstelle aufweist.

9. Airbagmodul nach Anspruch 8, **dadurch gekennzeichnet, dass** für die Erzeugung der Sollreißstelle scharfe Kanten (33) an der Innenseite der Abdeckkappe (32) vorgesehen sind.

10. Airbagmodul nach mindestens einem der Ansprüche 7 bis 9, **dadurch gekennzeichnet, dass** die Folie (35) eine thermisch erzeugte Sollreißstelle aufweist.

11. Airbagmodul nach mindestens einem der Ansprüche 7 bis 10, **dadurch gekennzeichnet, dass** für die Erzeugung der Sollreißstelle mindestens ein Heizdraht (34) vorgesehen ist.

12. Airbagmodul nach Anspruch 11, **dadurch gekennzeichnet, dass** der Heizdraht (34) zwischen der Abdeckkappe (36) und der Folie (35) angeordnet ist.

13. Airbagmodul nach mindestens einem der vorhergehenden Ansprüche, **dadurch gekennzeichnet, dass** die Abdeckkappe (39) an ihrer Innenseite Haftmittel (37, 38) aufweist, an die die Folie (35) bei Entfaltung des Gassacks andrückbar ist.

14. Airbagmodul nach Anspruch 13, **dadurch gekennzeichnet, dass** als Haftmittel doppelseitiges Klebeband (37) oder Strukturelemente (38) mit einem hohen Reibwert vorgesehen sind.

## Claims

1. An airbag module with an airbag packed in foil under vacuum, with a gas generator and with a covering cap, wherein in the event of a crash, the foil (1, 2, 4, 5, 35) has at least one predetermined tearing point (3, 6, 7, 8, 13-18), **characterized in that**, the predetermined tearing point (3, 6, 7, 8, 13-18) is provided in the region of the tear-open edges (30) of the covering cap (28), and **in that** the foil is connected or can be connected at least partially to the covering cap (28, 39) in sections (27) which lie next to the tear-open edges (30) of the covering cap (28, 39), or **in that** this connection takes place only upon deployment of the airbag.

2. The airbag module as claimed in claim 1, **characterized in that** the foil (1, 2, 4, 5) already has a predetermined tearing point (3, 6) before the airbag is packed.

3. The airbag module as claimed in claim 2, **characterized in that** a tear-open seam (3) or an impressed contour (6) is provided as the predetermined tearing point.

4. The airbag module as claimed in claim 2 or 3, **characterized in that** the predetermined tearing point (3, 6) is provided in one layer (2, 5) when a multilayer foil is used.

5. The airbag module as claimed in claim 4, **characterized in that** the predetermined tearing point (3, 6) is provided in the outer layer (2, 5) which faces the covering cap.

6. The airbag module as claimed in at least one of the preceding claims, **characterized in that** an all-over, linear or spot-shaped connection is provided.

7. The airbag module as claimed in claim 1, **characterized in that** the foil (35) has a predetermined tearing point only upon or directly before firing of the gas generator.

8. The airbag module as claimed in claim 7, **characterized in that** the foil (35) has a mechanically produced predetermined tearing point.

9. The airbag module as claimed in claim 8, **characterized in that** the sharp edges (33) are provided on the inside of the covering cap (32) to produce the predetermined tearing point.

10. The airbag module as claimed in at least one of claims 7 to 9, **characterized in that** the foil (35) has a thermally produced predetermined tearing point.

11. The airbag module as claimed in at least one of claims 7 to 10, **characterized in that** at least one heating wire (34) is provided to produce the predetermined tearing point.

12. The airbag module as claimed in claim 11, **characterized in that** the heating wire (34) is arranged between the covering cap (36) and the foil (35).

13. The airbag module as claimed in at least one of the preceding claims, **characterized in that** the inside of the covering cap (39) has adhesive agents (37, 38) against which the foil (35) can be pressed when the airbag is deployed.

14. The airbag module as claimed in claim 13, **characterized in that** double-sided adhesive tape (37) or structural elements (38) with a high coefficient of friction are provided as the adhesive agents.

## Revendications

1. Module d'airbag comprenant un sac à gaz emballé dans une feuille sous vide, comprenant un générateur de gaz et un capuchon de recouvrement, dans lequel la feuille (1, 2, 4, 5, 35) comporte, dans de cas de collision, au moins un emplacement de déchirure de consigne (3, 6,7,8,13-18),
**caractérisé en ce que** l'emplacement de déchirure de consigne (3, 6, 7, 8, 13-18) est prévu dans la région des arêtes de déchirure (30) du capuchon de recouvrement (28), et **en ce que**, dans des tronçons (27), qui sont situés à côté des arêtes de déchirure (30) du capuchon de recouvrement (28, 39), la feuille est jointe au moins temporairement au capuchon de recouvrement (28, 39), ou **en ce que** cette jonction a lieu uniquement lors du déploiement du sac à gaz.

2. Module d'airbag selon la revendication 1, **caractérisé en ce que** la feuille (1, 2, 4, 5) comporte un emplacement de déchirure de consigne (3, 6) préalablement à l'emballage du sac à gaz.

3. Module d'airbag selon la revendication 2, **caractérisé en ce qu'**un cordon à déchirer (3) ou un contour matricé (6) est prévu à titre d'emplacement de déchirure de consigne.

4. Module d'airbag selon la revendication 2 ou 3, **caractérisé en ce que**, lors de l'utilisation d'une feuille multicouches, l'emplacement de déchirure de consigne (3, 6) est prévu dans une couche (2, 5).

5. Module d'airbag selon la revendication 4, **caractérisé en ce que** l'emplacement de déchirure de consigne (3, 6) est prévu dans la couche extérieure (2, 5) tournée vers le capuchon de recouvrement.

6. Module d'airbag selon l'une au moins des revendications précédentes, **caractérisé en ce qu'**il est prévu une jonction soit sur toute la surface, soit sous forme linéaire, soit encore sous forme de points.

7. Module d'airbag selon la revendication 1, **caractérisé en ce que** la feuille (35) comporte un emplacement de déchirure de consigne uniquement lors de l'allumage du générateur à gaz ou immédiatement avant cet allumage.

8. Module d'airbag selon la revendication 7, **caractérisé en ce que** la feuille (35) comporte un emplacement de déchirure de consigne engendré mécaniquement.

9. Module d'airbag selon la revendication 8, **caractérisé en ce que** des arêtes vives (33) sont prévues sur la face intérieure du capuchon de recouvrement (32) pour générer l'emplacement de déchirure de consigne.

10. Module d'airbag selon l'une au moins des revendications 7 à 9, **caractérisé en ce que** la feuille (35) comporte un emplacement de déchirure de consigne engendré thermiquement.

11. Module d'airbag selon l'une au moins des revendications 7 à 10, **caractérisé en ce qu'**il est prévu au moins un fil chauffant (34) pour la génération de l'emplacement de déchirure de consigne.

12. Module d'airbag selon la revendication 11, **caractérisé en ce que** le fil chauffant (34) est agencé entre le capuchon de recouvrement (36) et la feuille (35).

13. Module d'airbag selon l'une au moins des revendications précédentes, **caractérisé en ce que** le capuchon de recouvrement (39) comporte sur sa face intérieure des agents adhésifs (37, 38) contre lesquels la feuille (35) peut être pressée lors du déploiement du sac à gaz.

14. Module d'airbag selon la revendication 13, **caractérisé en ce qu'**il est prévu à titre d'agent adhésif un ruban autocollant double face (37) ou des éléments structurels (38) présentant un coefficient de friction élevé.
